# EUROPEAN PATENT SPECIFICATION

(11) **EP 2 456 252 B1**
(45) Date of publication and mention of the grant of the patent: **26.04.2017**
(21) Application number: 09847338.2
(22) Date of filing: 16.07.2009
(51) Int. Cl.: H04W 16/26, H04B 7/15, H04W 52/52, H04B 7/155

(54) **WIRELESS COMMUNICATION SYSTEM, BASE STATION, RELAY STATION AND METHOD FOR WIRELESS COMMUNICATION**
DRAHTLOSES KOMMUNIKATIONSSYSTEM, BASISSTATION, RELAISSTATION UND VERFAHREN FÜR DRAHTLOSE KOMMUNIKATION
SYSTÈME DE COMMUNICATION SANS FIL, STATION DE BASE, STATION RELAIS ET PROCÉDÉ DE COMMUNICATION SANS FIL

(43) Date of publication of application: 23.05.2012
(73) Proprietor: Fujitsu Limited, Kawasaki-shi, Kanagawa 211-8588 (JP)
(72) Inventor: SAWAMOTO, Toshiro, Kawasaki-shi Kanagawa 211-8588 (JP)
(74) Representative: Ward, James Norman
(86) International application number: PCT/JP2009/062916
(87) International publication number: WO 2011/007440

(56) References cited:
- WO-A1-2006/098273
- WO-A1-2008/047429
- JP-A- 2007 251 789
- US-A1- 2003 214 919

## Description

### TECHNICAL FIELD

The present invention relates to a wireless communication system, a base station, a relay station, and a wireless communication method.

### BACKGROUND ART

A relay station is conventionally used in wireless communication systems. Relay stations include non-regenerating types that amplify and transmit received signals, and regenerating types that amplify and transmit received signals after first decoding the signal and regenerating the original data. Among mobile communication systems, a system is known that can determine communication paths capable of realizing high speed communication by multi-hop. For example, a mobile communication system includes a communication path determining unit that based on the interference level of the signals respectively received by a relay station and a base station, which form a communication path between communicating stations, determines a communication path that offers the fastest communication speed or that satisfies a specified line quality (see, for example, Patent Document 1).

Patent Document 1: International Publication Pamphlet No. 2003/101132

### DISCLOSURE OF INVENTION

### PROBLEM TO BE SOLVED BY THE INVENTION

With conventional regenerating type relay stations, since signals subject to amplification can be controlled according to user, the source of interference can be controlled. However, the decoding process takes time and consequently regenerating type relay stations have a problem in that a greater delay occurs than with non-regenerating type relay stations. Meanwhile, with conventional non-regenerating type relay stations a problem arises in that since amplification is performed at a constant gain factor for all bands, the relay station may become a source of interference.

US 2003/0214919 discloses a method and system for a channel selective repeater with capacity enhancement in a spread-spectrum wireless network.

An object of the disclosed wireless communication system and wireless communication method is to provide a system and a method that can prevent the relay station from becoming a source of interference. Another object of the disclosed base station and relay station is to provide a base station and a relay station that can implement a system capable of preventing the relay station from becoming a source of interference.

### MEANS FOR SOLVING PROBLEM

A relay station, a base station and a communication method are defined in the independent claims.

### EFFECT OF THE INVENTION

According to the disclosed communication system, base station, relay station, and wireless communication method, a relay station can be prevented from becoming a source of interference.

### BRIEF DESCRIPTION OF DRAWINGS

FIG. 1 is a block diagram of a wireless communication system according to a first embodiment;
FIG. 2 is a flowchart of the wireless communication method according to the first embodiment;
FIGS. 3 and 4 are block diagrams of examples of the wireless communication system according to the first embodiment;
FIG. 5 is a block diagram of a base station according to a second embodiment;
FIG. 6 is a block diagram of a relay station according to the second embodiment;
FIG. 7 is a schematic of an example of a table;
FIG. 8 is a flowchart of dynamic allocation in the wireless communication method according to the second embodiment;
FIG. 9 is a flowchart of random allocation in the wireless communication method according to the second embodiment;
FIG. 10 is a block diagram of the base station according to a third embodiment;
FIG. 11 is a block diagram of the relay station according to the third embodiment;
FIG. 12 is a flowchart of the wireless communication method according to the third embodiment;
FIG. 13 is a block diagram of the base station according to a fourth embodiment;
FIG. 14 is a block diagram of the relay station according to the fourth embodiment;
FIG. 15 is a flowchart of the wireless communication method according to the fourth embodiment;
FIG. 16 is a block diagram of the base station according to a fifth embodiment;
FIG. 17 is a flowchart of the wireless communication method according to the fifth embodiment;
FIG. 18 is a block diagram of the base station according to a sixth embodiment;
FIG. 19 is a flowchart of the wireless communication method according to the sixth embodiment;
FIG. 20 is a block diagram of the base station according to a seventh embodiment; and
FIG. 21 is a flowchart of the wireless communication method according to the seventh embodiment.

### BEST MODE(S) FOR CARRYING OUT THE INVENTION

Preferred embodiments of a wireless communication system, a base station, a relay station, and a wireless communication method according to the present invention will be described in detail with reference to the accompanying drawings. The invention is not limited by the embodiments below.

### (First embodiment)

In a first embodiment, a base station calculates the number of mobile stations whose signals require amplification at a relay station or the rate of mobile stations whose signals require amplification among all of the mobile station within the cell. Hereinafter, "the number of mobile stations whose signals require amplification at a relay station, or the rate of mobile stations whose signals require amplification among all of the mobile station within the cell" is simplified as "the number of or the rate of mobile stations requiring amplification". The relay station, based on the number of or the rate of mobile stations requiring amplification, performs amplification with respect to one or more bands among multiple bands.

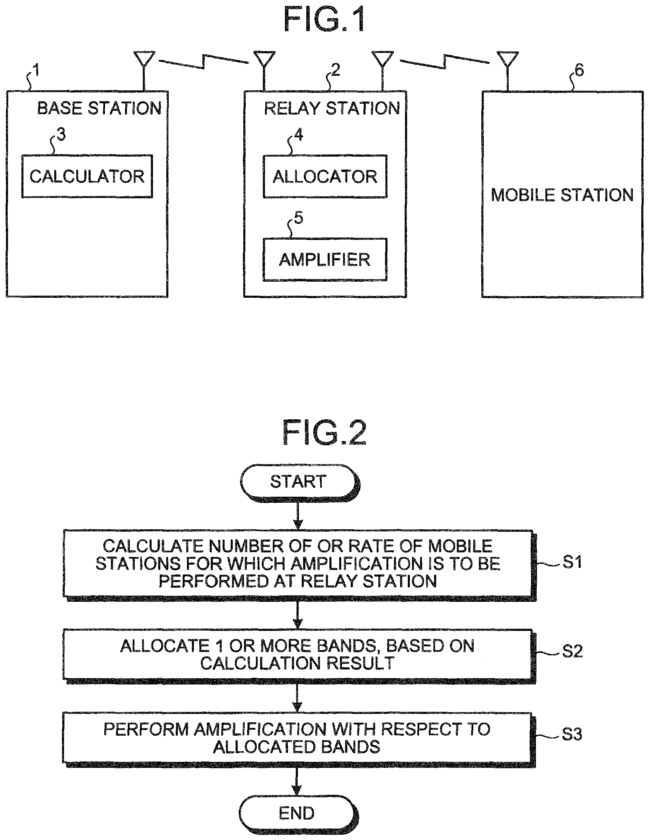

FIG. 1 is a block diagram of the wireless communication system according to a first embodiment. As depicted in FIG. 1, the wireless communication system includes a base station 1 and a relay station 2. The base station 1 includes a calculator 3 that calculates the number of or the rate of mobile stations 6 requiring amplification. The relay station 2, for example, includes an allocator 4 and an amplifier 5. The allocator 4, based on calculation results obtained by the calculator 3, allocates one or more bands for performing amplification. The amplifier 5 performs amplification with respect to the bands allocated by the allocator 4. Configuration may be such that the allocator 4 is included at the base station 1. The number of the relay stations 2 and/or the number of the mobile stations 6 may be plural.

FIG. 2 is a flowchart of the wireless communication method according to the first embodiment. As depicted in FIG. 2, when a process of determining whether to perform amplification begins during communication between the base station and a mobile station, the base station calculates the number of or the rate of mobile stations requiring amplification (step S1). The relay station, based on the calculations results at step S1, allocates one or more bands for performing amplification (step S2). Subsequently, the relay station performs amplification with respect to the bands allocated at step S2 (step S3). If the allocator is included at the base station, step S2 is performed at the base station.

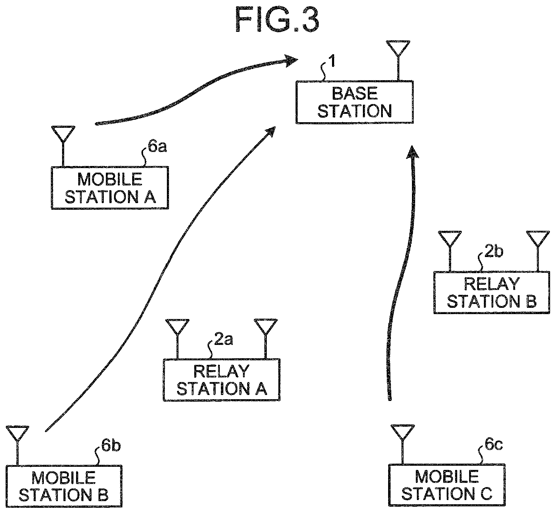

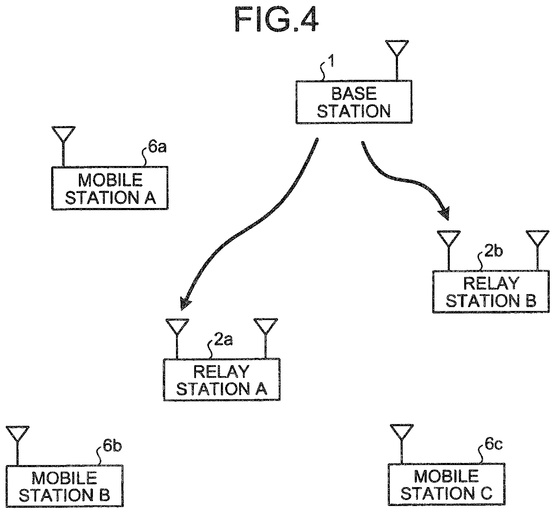

FIGS. 3 and 4 are block diagrams of examples of the wireless communication system according to the first embodiment. As depicted in FIG. 3, the wireless communication system includes the base station 1 and, one or more relay stations (in the example depicted, for example, relay stations A2a and B2b). Further, one or more mobile stations (in the example depicted, for example, mobile stations A6a, B6b, C6c) are present in the wireless communication system. For example, when a wireless signal is transmitted in the uplink direction from a mobile station to the base station, the base station 1 determines whether the wireless signals communicated with the mobile stations 6a, 6b, 6c require amplification, based on the reception state of the wireless signals transmitted from each of the mobile stations 6a, 6b, and 6c. In FIG. 3, the width of the arrows indicating wireless communication links between the base station 1 and each of the mobile stations 6a, 6b, 6c, indicate the reception state of the wireless signal at the base station 1, where the wider the arrow, the better the reception state is.

For example, when the reception state of the wireless signals respectively transmitted from mobile station A6a and mobile station C6c is good, the base station 1 determines that amplification of wireless signals to and from mobile station A6a and mobile station C6c do not require amplification. When the reception state of the wireless signal transmitted from mobile station B6b is poor, the base station 1 determines that wireless signals to and from mobile station B6b require amplification. Therefore, in the depicted example, the number of mobile stations for which amplification is required is one and the rate of mobile stations requiring amplification is 1/3.

As depicted in FIG. 4, the base station 1 notifies each of the relay stations 2a, 2b of the number of or the rate of mobile stations requiring amplification. The relay stations 2a, 2b, based on the number of or the rate of mobile stations requiring amplification, allocated one or more bands for performing amplification. Alternatively, based on the number of or the rate of mobile stations requiring amplification, the base station 1 may allocate one or more bands for performing amplification and further provide the relay stations 2a, 2b with information related to the allocation. The relay stations 2a, 2b perform amplification with respect to the allocated bands. The number of relay stations may be one or, three or more. The number of mobile stations may be one, two or, four or more.

According to the first embodiment, since the relay station performs amplification with respect to one or more of the bands, based on the number of or the rate of mobile stations requiring amplification, necessary and sufficient amplification can be performed according to the number of or the rate of mobile stations requiring amplification. In other words, configuration can be such that the relay station does not perform amplification with respect to more bands than is necessary. Therefore, compared to a case where amplification is performed at a constant gain with respect to all of the bands, the relay station can be prevented from becoming a source of interference.

### (Second embodiment)

In a second embodiment, the entire active band of the wireless communication system is, for example, divided into sub-bands. In a Long Term Evolution (LTE) system, the active band is, for example, 20MHz. For an LTE-Advanced system, which is an expansion of LTE, active band on the order of 100MHz is under investigation. To maintain compatibility between LTE systems and LTE-Advanced systems, for example, making the active band of LTE-Advanced systems a multiple (e.g., 5) of the active band of LTE systems is under investigation. In other words, in an LTE-Advanced, for example, active band on the order of 100MHz would be divided among five 20MHz-sub-bands. The second embodiment is applicable to such an LTE-Advanced system. Here, as the second embodiment, an example of application to an LTE-Advanced system will be described.

The base station calculates the number of or the rate of mobile stations requiring amplification. Based on the number of or the rate of mobile stations requiring amplification as calculated by the base station, the relay station, from among the sub-bands, allocates one or more sub-bands for performing amplification. The relay station amplifies input signals of the sub-bands allocated for performing amplification.

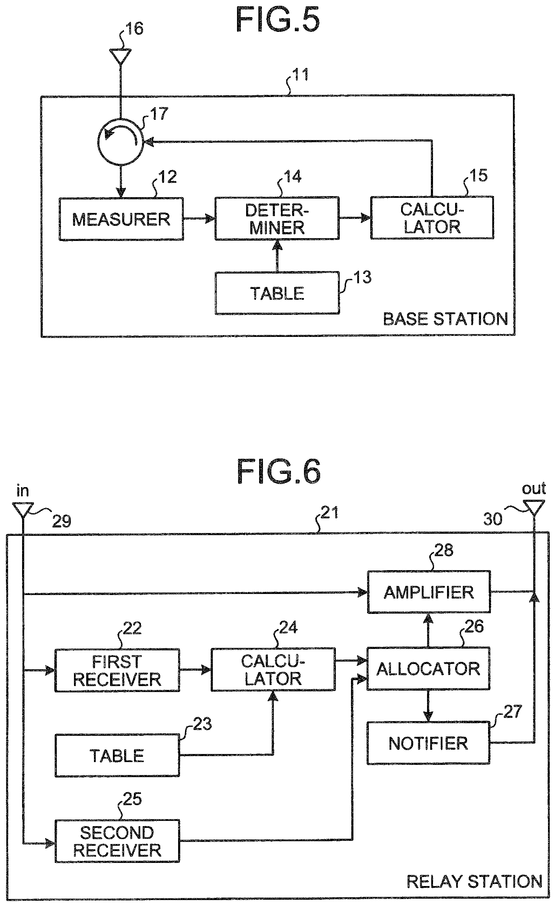

FIG. 5 is a block diagram of the base station according to the second embodiment. As depicted in FIG. 5, the base station 11 includes a measurer 12, a table 13, a determiner 14, and a calculator 15. The base station 11 receives, via an antenna 16 and a switch 17, wireless signals transmitted from a non-depicted mobile station. The measurer 12 measures the reception quality of mobile stations within the cell. Signal to interference power rate (SIR) may be given as one example of reception quality. Table 13 stores thresholds used when the reception quality of a mobile station is determined.

The determiner 14 compares mobile station reception quality and a threshold. The determiner 14, for example, determines that amplification is not necessary for a mobile station whose reception quality is equal to or exceeds the threshold. The determiner 14 determines that amplification is necessary for a mobile station whose reception quality does not exceed the threshold. The calculator 15, based on the determination results obtained by the determiner 14, calculates the number of or the rate of mobile stations requiring amplification. The base station 11, via the switch 17 and the antenna 16, gives notification of (broadcasts) the number of or the rate of mobile stations requiring amplification as calculated by the calculator 15. The antenna 16, the switch 17, the measurer 12, table 13, the determiner 14, and the calculator 15, for example, operate as the calculator 3 in the first embodiment.

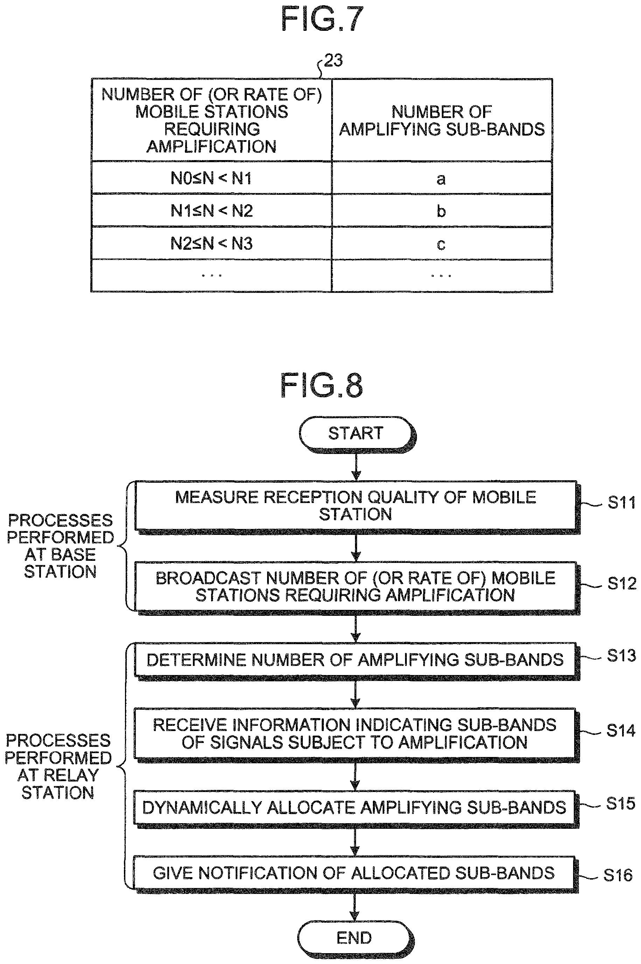

FIG. 6 is a block diagram of the relay station according to the second embodiment. FIG. 7 is a schematic of an example of the table. As depicted in FIG. 6, a relay station 21 is, for example, a non-regenerating type relay station and includes a first receiver 22, a table 23, a calculator 24, a second receiver 25, an allocator 26, a notifier 27, and an amplifier 28. The relay station 21, via an antenna 29, receives wireless signals from a non-depicted base station or mobile station. The first receiver 22 receives and stores the number of or the rate of mobiles stations requiring amplification broadcasted by the base station.

Table 23 stores correspondence relationships between the number of or the rate of mobile stations requiring amplification and the number of amplifying sub-bands (see FIG. 7). Correspondence relationships between the number of or the rate of mobile stations requiring amplification and the number of amplifying sub-bands may be, for example, preliminarily obtained by simulation using a computing device. In FIG. 7, N0, N1, N2, and N3 are the number of or the rate of mobile stations requiring amplification and have a magnitude relationship of N0<N1<N2<N3, for example. Further, a, b, and c are the number of amplifying sub-bands and have a magnitude relationship of a<b<c, for example.

The calculator 24, based on the number of or the rate of mobile stations requiring amplification received by the first receiver 22 and the correspondence relationships indicated in table 23, calculates the number of amplifying sub-bands. The second receiver 25 receives and stores information provided by other non-depicted relay stations. The information provided by the other relay stations, for example, includes information indicating the sub-bands of signals subject to amplification by the respective relay stations. The allocator 26, based on the number of amplifying sub-bands calculated by the calculator 24, allocates from among the sub-bands, sub-bands of the number calculated by the calculator 24. A dynamic allocation method and a random allocation method may be given as examples of the sub-band allocation method.

The dynamic allocation method is an allocation method of allocating, as sub-bands for performing amplification, sub-bands that are not in-use. The sub-bands are allocated based on, for example, information that is received by the second receiver 25 and that indicates the sub-bands of signals subject to amplification by other relay stations. The dynamic allocation method can prevent the relay stations in the cell of the base station and the relay stations in a neighboring cell from amplifying signals of the same sub-bands, thereby preventing interference from occurring. The random allocation method is a method of allocating, as sub-bands for performing amplification, an arbitrary sub-band, without referring to information indicating the sub-bands of signals subject to amplification by other relay stations. The random allocation method facilitates processing at the relay device since the sharing of information indicating the sub-bands of signals subject to amplification does not need to be shared among the relay stations.

Configuration may be such that during operation, the relay station 21 switches between the two allocation methods depending on whether a preliminarily set condition is satisfied. The allocation method of the relay station 21 may be fixed as either one of the allocation methods according to the environment where the relay station 21 is installed. If the allocation method of the relay station 21 is fixed as the random allocation method, the second receiver 25 and the notifier 27 described hereinafter do not operate. Therefore, if the allocation method of the relay station 21 is fixed as the random allocation method, the second receiver 25 and the notifier 27 may be omitted.

The notifier 27 provides to other relay stations and via an antenna 30, information indicating the sub-bands allocated by the allocator 26, i.e., information indicating the sub-bands of the signals subject to amplification at the relay station 21. The amplifier 28 amplifies analog input signals of the sub-bands allocated by the allocator 26. The amplified signal is transmitted via the antenna 30. The antenna 29, the first receiver 22, table 23, the calculator 24, the second receiver 25, and the allocator 26, for example, operate as the allocator 4 in the first embodiment. The amplifier 28, for example, operates as the amplifier 5 in the first embodiment.

FIG. 8 is a flowchart of dynamic allocation in the wireless communication method according to the second embodiment. As depicted in FIG. 8, when a process of determining whether to perform amplification begins during wireless communication between the base station and a mobile station during a state when the relay station is not performing amplification, the base station measures the reception quality between the base station and mobile stations, such as the SIR of the mobile stations (step S11). The base station compares the reception quality of the mobile stations and a preliminarily set threshold; and for example, for a mobile station whose reception quality does not exceed the threshold, determines that the mobile station requires amplification. The base station, based on determination results concerning the need for amplification, calculates the number of or the rate of mobile stations requiring amplification and broadcasts the number of or the rate of mobile stations requiring amplification (step S12).

The relay station receives the number of or the rate of mobile stations requiring amplification broadcasted by the base station; and based on the number of or the rate of mobile stations requiring amplification and the correspondence relationship of the number of or the rate of mobile stations requiring amplification and the number of amplifying sub-bands, the relay station determines the number of amplifying sub-bands (step S13). The relay station further receives information that is provided by other relay stations and that indicates the sub-bands of signals subject to amplification by the other relay stations (step S14). The relay station, based on the number of amplifying sub-bands determined at step S13 and the information received at step S14 and indicating the sub-bands of signals subject to amplification by the other relay stations, allocates as sub-bands for performing amplification, sub-bands of the number determined at step S13. In other words, the relay station dynamically allocates the amplifying sub-bands (step S15). The relay station provides to the other relay stations, information indicating the amplifying sub-bands allocated at step S15 (step S16). The relay station further amplifies analog input signals of the sub-bands allocated at step S15. In this series of operations, the execution timing of step S14 may be before or after step S13.

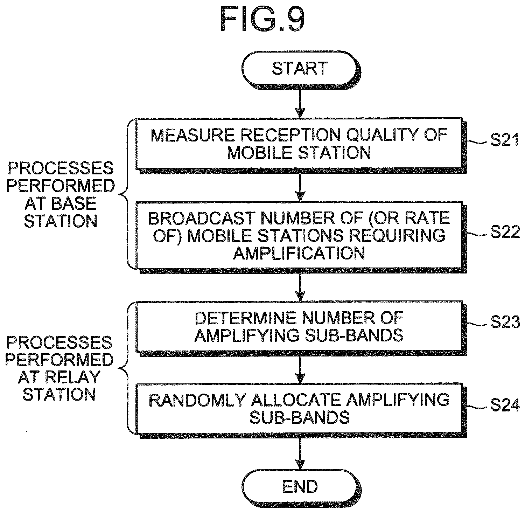

FIG. 9 is a flowchart of random allocation in the wireless communication method according to the second embodiment. As depicted in FIG. 9, when the process begins, similar to steps S11 to S13 in the case of dynamic allocation, the base station measures mobile station reception quality (step S21) and broadcasts the number of or the rate of mobile stations requiring amplification (step S22). The relay station determines the number of amplifying sub-bands (step S23). Based on the number of amplifying sub-bands determined at step S23, the relay station, from among the sub-bands, randomly allocates sub-bands of the number determined at step S23 (step S24). Subsequently, the relay station amplifies analog input signals of the sub-bands allocated at step S24.

According to the second embodiment, effects similar to those of the first embodiment can be obtained. Further, a scheduler provided at the base station, allocates wireless resources of a mobile station, whose reception quality is poor, to sub-bands for which the reception quality has been improved by amplification at a relay station, whereby the reception quality of the mobile station having poor reception quality can be improved. Furthermore, a regenerating type relay station may be used.

### (Third embodiment)

In a third embodiment, similar to the second embodiment, the entire active band of the wireless communication system is, for example, divided into sub-bands. As the third embodiment, an example of application to an LTE-Advanced system will be described. The base station calculates the number of or the rate of mobile stations requiring amplification and based on the calculation results, allocates from among the sub-bands, one or more sub-bands for performing amplification. The relay station amplifies input signals of the sub-bands allocated by the base station.

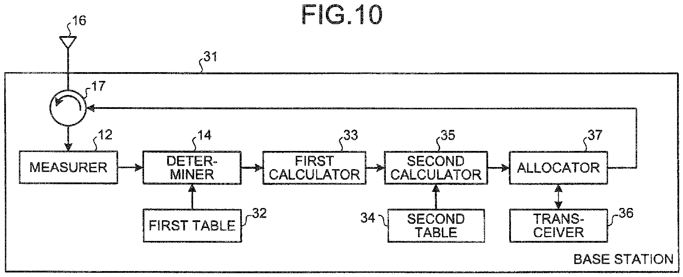

FIG. 10 is a block diagram of the base station according to the third embodiment. As depicted in FIG. 10, a base station 31 includes the measurer 12, a first table 32, the determiner 14, a first calculator 33, a second table 34, a second calculator 35, a transceiver 36, and an allocator 37. The first table 32 and the first calculator 33 are respectively similar to the table 13 and the calculator 15 of the base station 11 in the second embodiment. The second table 34 is similar to table 23 of the relay station 21 in the second embodiment. The second calculator 35 calculates the number of amplifying sub-bands, based on the number of or the rate of mobile stations requiring amplification as calculated by the first calculator 33 and correspondence relationships stored in the second table 34.

The transceiver 36 transmits to other base stations, information indicating the sub-bands of signals that are subject to amplification by relay stations within the cell of the base station 31. The transceiver 36 receives and stores information that is from other base stations and that indicates the sub-bands of signals that are subject to amplification by the relay stations in the cells of the other base stations. The base stations exchange information through a line for communicating control information. An X2 Control Plane Interface may be given as an example of the line for communicating control information.

The allocator 37, from among the sub-bands, randomly allocates sub-bands of the number calculated by the second calculator 35. Further, the allocator 37, based on the information received by the transceiver 36 and indicating the sub-bands of signals that are subject to amplification by other relay stations, dynamically allocates from among the sub-bands, sub-bands of the number calculated by the second calculator 35. In the case of dynamic allocation, the allocator 37 may allocate from among the sub-bands and in a given order such as descending order of frequency, the sub-bands of signals that are not subject to amplification by the relay station (available sub-bands).

The base station 31, via the switch 17 and the antenna 16, broadcasts information indicating the sub-bands allocated by the allocator 37. Other aspects of the configuration of the base station 31 are similar to those of the second embodiment. The antenna 16, the switch 17, the measurer 12, the first table 32, the determiner 14, and the first calculator 33, for example, operate as the calculator 3 in the first embodiment. The second table 34, the second calculator 35, the transceiver 36, and the allocator 37, for example, operate as the allocator 4 in the first embodiment.

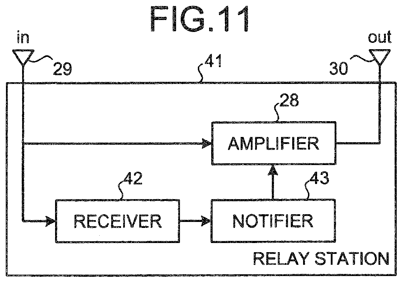

FIG. 11 is a block diagram of the relay station according to the third embodiment. As depicted in FIG. 11, a relay station 41 is, for example, a non-regenerating type relay station and includes a receiver 42, a notifier 43, and the amplifier 28. The receiver 42 receives and stores information that is broadcasted by the base station and that indicates the sub-bands allocated for performing amplification. The notifier 43, based on the information received by the receiver 42 and indicating the sub-bands allocated for performing amplification, notifies the amplifier 28 of allocated sub-bands. The amplifier 28 amplifies analog input signals of the allocated sub-bands indicated by the notifier 43. Other aspects of the configuration of the relay station 41 are similar to those of the second embodiment. The antenna 29, the receiver 42, the notifier 43, and the amplifier 28, for example, operate as the amplifier 5 in the first embodiment.

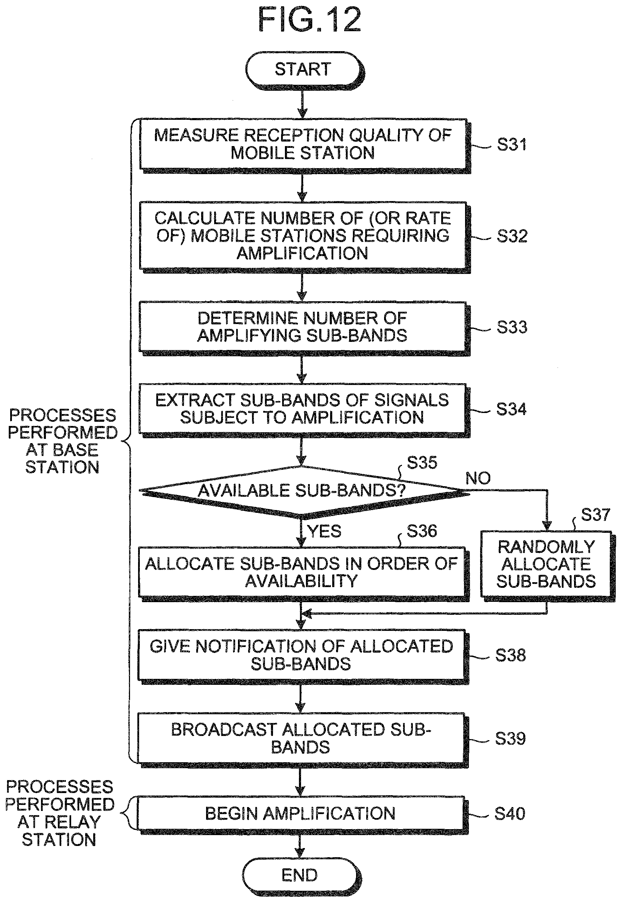

FIG. 12 is a flowchart of the wireless communication method according to the third embodiment. As depicted in FIG. 12, when a process of determining whether to perform amplification begins during wireless communication between the base station and a mobile station, similar to steps S11 to S12 in the second embodiment, the base station measures mobile station reception quality (step S31) and calculates the number of or the rate of mobile stations requiring amplification (step S32). However, at step S32, the base station does not broadcast the number of or the rate of mobile stations requiring amplification. The base station, based on the number of or the rate of mobile stations requiring amplification and the correspondence relationships between the number of or the rate of mobile stations requiring amplification and the number of amplifying sub-bands, determines the number of amplifying sub-bands (step S33). The base station extracts the sub-bands of signals that are subject to amplification by relay stations within the areas of other base stations (step S34).

The base station, based on the sub-bands extracted at step S34, determines whether there is a sub-band for which amplification can be performed, i.e., a sub-band of signals that are not being amplified by another relay station (an available sub-band) (step S35). If there is a sub-band for which amplification can be performed (step S35: YES), the base station allocates the sub-band for performing amplification (step S36). Here, the base station may allocate available sub-bands according to a given order, such as in descending order of frequency. If there is no sub-band for which amplification can be performed (step S35: NO), the base station randomly allocates a sub-band for performing amplification (step S37). Random allocation of a sub-band for performing amplification lowers the possibility of the same sub-band being allocated by relay stations within a range of interacting with one another, whereby interference can be prevented from occurring.

When allocation of the sub-band ends, the base station provides to other base stations, information indicating the sub-bands allocated for performing amplification (step S38). The base station further broadcasts the information indicating the sub-bands allocated for performing amplification (step S39). The relay station receives the information that is provided by base station and that indicates the sub-bands allocated for performing amplification, and amplifies analog input signals of the allocated sub-bands (step S40). In this series of operations, the execution timing of step S34 may be before or after step S33, before step S32, or before step S31. Further, the execution timing of step S38 may be before or after step S39, or after step S40.

According to the third embodiment, effects similar to those of the first embodiment can be obtained. Further, similar to the second embodiment, the reception quality of a mobile station having poor reception quality can be improved. Furthermore, a regenerating type relay station may be used. The allocation method of the base station may be fixed to the random method of allocating sub-bands. When the allocation method of the base station 31 is fixed to the random method, the transceiver 36, which performs communication, may be omitted. Further, when the allocation method of the base station 31 is fixed to the random method, steps S34 to S36 and step S38 in the flowchart depicted in FIG. 12 may be omitted.

### (Fourth embodiment)

In a fourth embodiment, the relay station of the third embodiment has information related to the mobile stations for which the relay station is to perform amplification. The relay station allocates sub-bands of a number corresponding to the number of mobile stations included in both information related to the mobile stations for which amplification is to be performed by the relay station and information related to mobile stations selected by the base station, as mobile station for which amplification is to be performed.

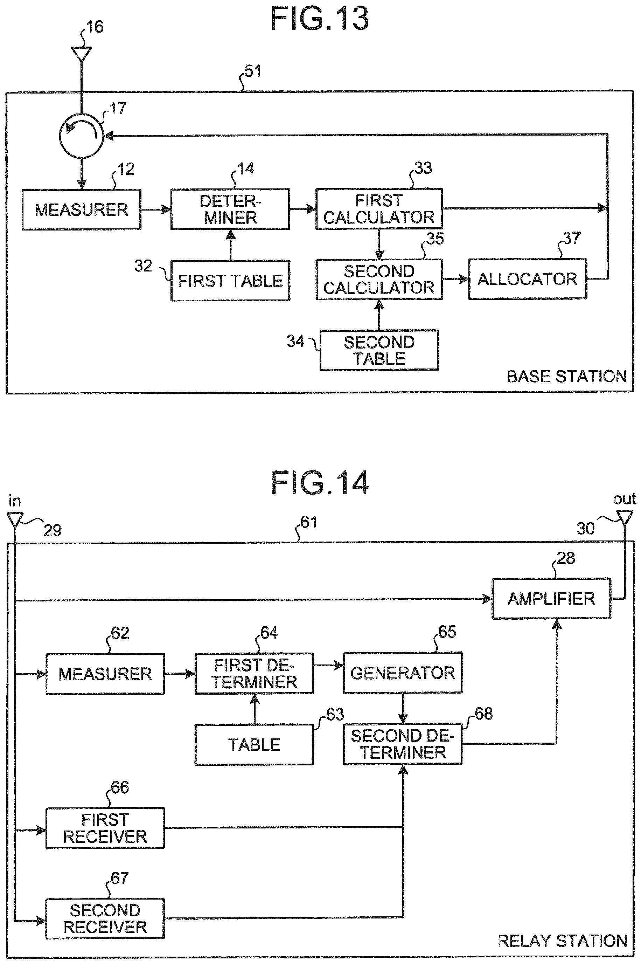

FIG. 13 is a block diagram of the base station according to the fourth embodiment. As depicted in FIG. 13, a base station 51 includes the measurer 12, the first table 32, the determiner 14, the first calculator 33, the second table 34, the second calculator 35, and the allocator 37. The first calculator 33 notifies the second calculator 35 of the number of or the rate of mobile stations requiring amplification and broadcasts, via the switch 17 and the antenna 16, information related to mobile stations for which amplification has been determined necessary by the determiner 14. From among the sub-bands, the allocator 37 randomly allocates for performing amplification, sub-bands of the number calculated by the second calculator 35 and broadcasts, via the switch 17 and the antenna 16, information indicating the sub-bands allocated for performing amplification. Other aspects of the configuration of the base station 51 are similar to the third embodiment.

FIG. 14 is a block diagram of the relay station according to the fourth embodiment. As depicted in FIG. 14, a relay station 61, for example, is a non-regenerating type relay station and includes a measurer 62, a table 63, a first determiner 64, a generator 65, a first receiver 66, a second receiver 67, a second determiner 68, and the amplifier 28. The measurer 62 measures the reception quality between the relay station and a mobile station, such as the SIR of the mobile station. Table 63 stores thresholds used when the reception quality of a mobile station is determined. Relationships between mobile station reception quality and determination-use thresholds may be, for example, preliminarily obtained by simulation using a computing device.

The first determiner 64 compares mobile station reception quality and a threshold. In general, the closer the mobile station is to the relay station, the better the reception quality is for the mobile station. The first determiner 64, for example, with respect to a mobile station whose reception quality exceeds the threshold, determines that the mobile station is nearby. A mobile station that has been determined to be nearby is a mobile station candidate for which amplification is to be performed by the relay station. The first determiner 64, for example, with respect to a mobile station whose reception quality does not exceed the threshold, determines that the mobile station is not nearby. A mobile station that has been determined to not be nearby is not a mobile station candidate for which amplification is to be performed by the relay station. The generator 65, based on the determination result obtained by the first determiner 64, generates a list of mobile station candidates for which amplification is to be performed by the relay station.

The first receiver 66 is similar to the receiver 42 in the third embodiment. The second receiver 67 receives and stores information that is from the base station and related to mobile stations for which amplification has been determined to be necessary by the base station. The second determiner 68, based on the mobile station candidate list and the information related to the mobile stations for which amplification has been determined to be necessary by the base station, determines whether to perform amplification operations at the relay station. When amplification operations are to be performed at the relay station, the second determiner 68, based on information indicating the sub-bands allocated by the base station, determines the sub-bands for actually performing amplification at the relay station.

For example, when all of the mobile stations for which amplification has been determined necessary by the base station are included in the mobile station candidate list of the relay station, the second determiner 68 determines all of the sub-bands allocated by the base station to be sub-bands for actually performing amplification at the relay station. When a portion of the mobile stations for which amplification has been determined necessary by the base station are included in the mobile station candidate list of the relay station, the second determiner 68 determines sub-bands of a number corresponding to the number of the mobile stations (for which amplification has been determined necessary by the base station) included in the mobile station candidate list of the relay station, to be sub-bands for actually performing amplification. In other words, among the mobile stations for which the base station has determined amplification necessary, the relay station 61 need not perform amplification with respect to the portion that is not included in the mobile station candidate list of the relay station. Therefore, when determining the sub-bands for performing amplification at the relay station, the second determiner 68 may, for example, randomly eliminate from among all of the sub-bands allocated by the base station, sub-bands of a number corresponding to the number of mobile stations for which amplification is not to be performed at the relay station. Correspondence relationships between the number of mobile stations for which amplification is to be performed at the relay station and the number of sub-bands to be eliminated may be preliminarily obtained, for example, by simulation using a computing device.

When none of the mobile stations for which amplification has been determined necessary by the base station are included in the mobile station candidate list of the relay station, the second determiner 68 determines none of the sub-bands allocated by the base station to be sub-bands for actually performing amplification. In other words, when none of the mobile stations for which amplification has been determined necessary by the base station are included in the mobile station candidate list of the relay station, the relay station 61 need not perform amplification. The second determiner 68 notifies the amplifier 28 of the sub-bands allocated for performing amplification. The amplifier 28 amplifies analog input signals of the allocated sub-bands determined by the second determiner 68. Other aspects of the configuration of the relay station 61 are similar to those of the third embodiment. The antenna 29, the measurer 62, the table 63, the first determiner 64, the generator 65, the first receiver 66, the second receiver 67, the second determiner 68, and the amplifier 28, for example, operate as the amplifier 5 in the first embodiment.

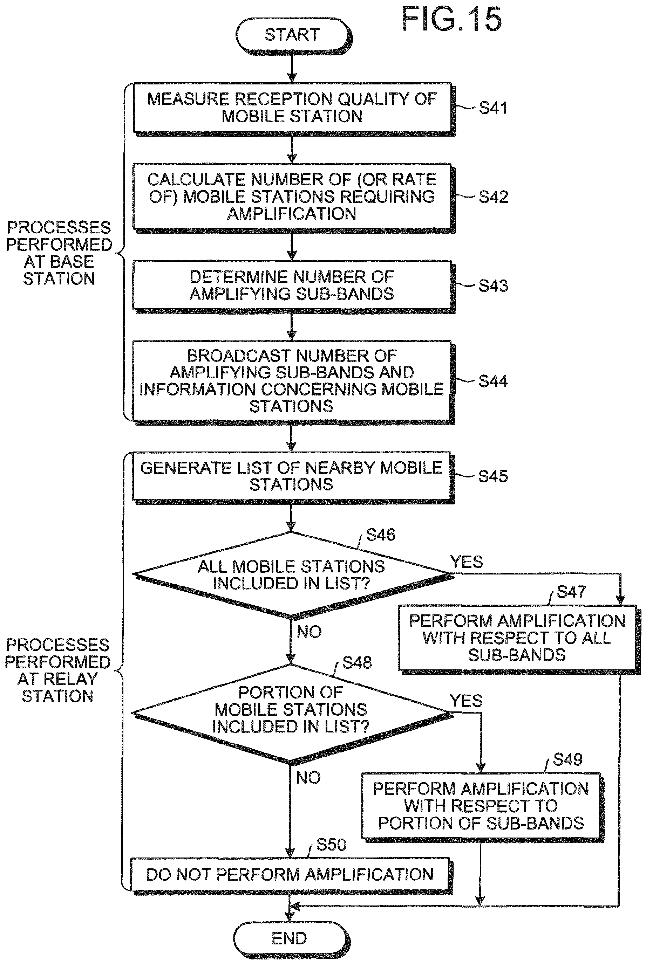

FIG. 15 is a flowchart of the wireless communication method according to the fourth embodiment. As depicted in FIG. 15, when processing begins, similar to steps S31 to S33 in the third embodiment, the base station measures mobile station reception quality (step S41), calculates the number of or the rate of mobile stations requiring amplification (step S42), and determines the number of amplifying sub-bands (step S43). The base station broadcasts the number of amplifying sub-bands and information related to the mobile stations for which amplification has been determined to be necessary (step S44).

On the other hand, the relay station measures the reception quality between the relay station and mobile stations, such as the SIR of the mobile stations. The relay station compares the reception quality of each mobile station with a predetermined threshold; and for example, for a mobile station whose reception quality exceeds the threshold, determines that the mobile station is nearby. The relay station creates a list of mobile stations that have been determined to be nearby (step S45). The relay station determines whether all of the mobile stations for which amplification has been determined to be necessary by the base station are included in the mobile station candidate list of the relay station (step S46). If all of the mobile stations are included in the mobile station candidate list of the relay station (step S46: YES), the relay station performs amplification with respect to all of the sub-bands allocated by the base station, for performing amplification (step S47).

If a portion of the mobile stations for which amplification has been determined necessary by the base station are included in the mobile station candidate list of the relay station (step S46: NO, step S48: YES), the relay station performs amplification with respect to sub-bands of a number that corresponds to the number of the mobile stations for which amplification has been determined to be necessary by the base station, included in the mobile station candidate list of the relay station (step S49). When none of the mobile stations for which amplification has been determined to be necessary by the base station are included in the mobile station candidate list of the relay station (step S48: NO), the relay station does not perform amplification with respect to any of the sub-bands allocated by the base station (step S50). In this series of operations, the execution timing of step S45 may be before or after step S44, before step S43, before step S42, or before step S41.

According to the fourth embodiment, effects similar to those of the first embodiment can be obtained. Further, since the relay station performs amplification with respect to sub-bands of a number corresponding to the number of mobile stations for which amplification has been determined necessary by the base station, included in the mobile station candidate list of the relay station, configuration can be such that the relay station does not perform amplification with respect to sub-bands of a number corresponding to the mobile stations not included in the mobile station candidate list of the relay station. Therefore, the relay station can be prevented from becoming a source of interference. Further, similar to the second embodiment, the reception quality of a mobile station whose reception quality is poor can be improved. Furthermore, a regenerating type relay station may be used.

### (Fifth embodiment)

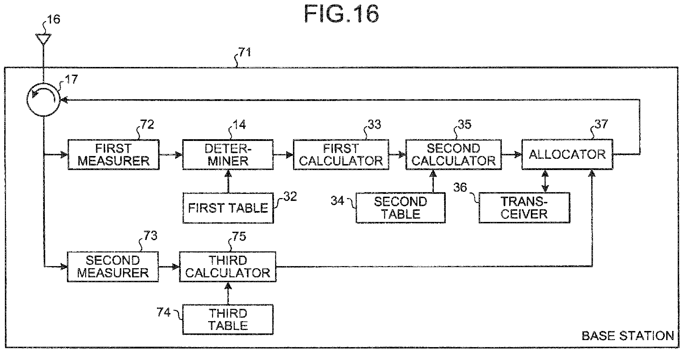

In a fifth embodiment, the base station of the third embodiment allocates, based on the inner-cell interference power of each sub-band, one or more sub-bands for performing amplification. The configuration of the base station in the fifth embodiment is, for example, as depicted in FIG. 16. The configuration of the relay station in the fifth embodiment is similar to the relay station in the third embodiment.

FIG. 16 is a block diagram of the base station according to the fifth embodiment. As depicted in FIG. 16, a base station 71 includes a first measurer 72, the first table 32, the determiner 14, the first calculator 33, the second table 34, the second calculator 35, the transceiver 36, the allocator 37, a second measurer 73, a third table 74, and a third calculator 75. The first measurer 72 is similar to the measurer 12 of the third embodiment. The second measurer 73 measures interference power in the cell for each sub-band. The third table 74 stores thresholds used for determining based on sub-band inner-cell interference power, whether to perform amplification. Relationships between sub-band inner-cell interference power and the determination-use thresholds may be, for example, preliminarily obtained by simulation using a computing device.

The third calculator 75, based on sub-band inner-cell interference power and a threshold in the third table 74, determines the sub-bands for which amplification can be performed at the relay station. The third calculator 75, for example, determines sub-bands having an interference power that is less than or equal to the threshold to be sub-bands for which amplification can be performed at the relay station. The third calculator 75, for example, determines sub-bands having an interference power that exceeds the threshold to be sub-bands for which amplification cannot be performed at the relay station.

The allocator 37, based on information received by the transceiver 36 and indicating the sub-bands for which amplification is being performed at the relay station, obtains the sub-bands for which the relay station is not performing amplification (available sub-bands). The allocator 37, from among the available sub-bands, extracts the sub-bands for which amplification can be performed at the relay station as determined by the third calculator 75. The allocator 37, from among the extracted sub-bands, in a given order (e.g., in descending order of interference power), allocates for performing amplification, sub-bands corresponding in number to that calculated by the second calculator 35. Alternatively, the allocator 37, from among the extracted sub-bands, allocates arbitrary sub-bands corresponding in number of that calculated by the second calculator 35. When the number of amplifying sub-bands calculated at the second calculator 35 is greater than the number of sub-bands for which amplification can be performed as determined at the third calculator 75, the allocator 37 allocates all of the sub-bands for which amplification can be performed at the relay station. Other aspects of the configuration of the base station 71 are similar to those of the third embodiment. The antenna 16, the switch 17, the first measurer 72, the first table 32, the determiner 14, and the first calculator 33, for example, operate as the calculator 3 in the first embodiment. The second table 34, the second calculator 35, the transceiver 36, the allocator 37, the second measurer 73, the third table 74, and the third calculator 75, for example, operate as the allocator 4 in the first embodiment.

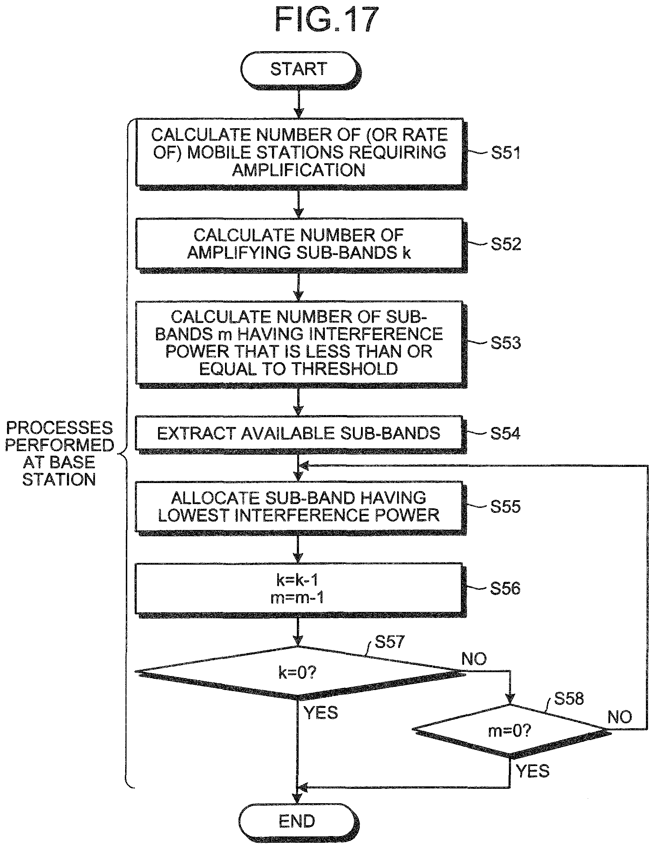

FIG. 17 is a flowchart of the wireless communication method according to the fifth embodiment. As depicted in FIG. 17, when a process of allocating sub-bands for performing amplification begins at base station, similar to steps S31 to S33 in the third embodiment, based on mobile station reception quality, the base station calculates the number of or the rate of mobile stations requiring amplification (step S51), and calculates the number of amplifying sub-bands k (where, k is a whole number, 0 or greater) (step S52). The base station calculates the number of sub-bands m (where, m is a whole number, 0 or greater) having an inner-cell interference power that is less than or equal to the threshold (step S53). The base station, based on information indicating the sub-bands of signals subject to amplification by relay stations in the areas of other base stations, extracts sub-bands (available sub-bands) for which amplification is not being performed by the other relay stations (step S54). The base station, among the available sub-bands, for example, allocates the sub-band having lowest interference power to be a sub-band for performing amplification (step S55).

The base station decrements k and m by 1, respectively (step S56). The base station determines whether the resulting value of k is 0 (step S57). If the value of k is 0 (step S57: YES), there are no more amplifying sub-bands and consequently, the base station ends the allocation process. If the value of k is not 0 (step S57: NO), the base station determines whether the value of m is 0 (step S58). If the value of m is 0 (step S58: YES), there are no more sub-bands having an inner-cell interference power that is less than or equal to the threshold and consequently, the base station ends the allocation process. If the value of m is not 0 (step S58: NO), the base station returns to step S55, at which time, for example, the base station allocates the sub-band having the lowest interference power (step S55).

Steps S55 to S58 are repeated until there are no more amplifying sub-bands or until there are no more sub-bands having an inner-cell interference power that is less than or equal to the threshold. In this series of operations, the execution timing of step S53 may be before or after step S52, or before step S51. Further, the execution timing of step S54 may be before or after step S53, before step S52, or before step S51. The processes performed at the base station and the relay station, respectively, after sub-bands have been allocated by the base station are similar to those of the third embodiment.

According to the fifth embodiment, effects similar to those of the first embodiment can be obtained. Further, the base station allocates sub-bands having an inner-cell interference power that is less than or equal to a threshold and consequently, the amplification of signals of sub-bands having an inner-cell interference power that exceeds the threshold can be prevented. Therefore, the relay station can be prevented from becoming a source of interference. Further, similar to the second embodiment, the reception quality of a mobile station whose reception quality is poor can be improved. Furthermore, a regenerating type relay station may be used.

### (Sixth embodiment)

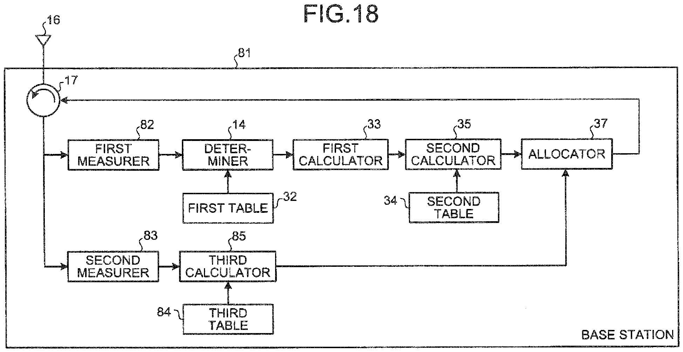

In a sixth embodiment, the base station of the third embodiment calculates gain for each sub-band, based on the inner-cell interference power of each sub-band. Configuration of the base station according to the sixth embodiment is, for example, as depicted in FIG. 18.

FIG. 18 is a block diagram of the base station according to the sixth embodiment. As depicted in FIG. 18, a base station 81 includes a first measurer 82, the first table 32, the determiner 14, the first calculator 33, the second table 34, the second calculator 35, the allocator 37, a second measurer 83, a third table 84, and a third calculator 85. The first measurer 82 is similar to the measurer 12 of the third embodiment. The second measurer 83 is similar to the second measurer 73 of the fifth embodiment. The third table 84 stores thresholds used when sub-band gain is determined based on sub-band inner-cell interference power. Relationships between sub-band inner-cell interference power and gain may be, for example, preliminarily obtained by simulation using a computing device. In general, the greater the inner-cell interference power is, the smaller the gain is.

The third calculator 85 calculates gain for each sub-band, based on sub-band inner-cell interference power and a threshold in the third table 84. The third calculator 85, based on the gain for each sub-band, determines the sub-bands for which amplification can be performed at the relay station. The third calculator 85, for example, determines a sub-band for which the gain is greater than or equal to the threshold, to be a sub-band for which amplification can be performed. The third calculator 85, for example, determines a sub-band for which the gain is less than the threshold to be a sub-band for which amplification cannot be performed at the relay station. The threshold used for determining, at the third calculator 85, whether amplification can be performed at the relay station may be, for example, preliminarily obtained by simulation using a computing device. The threshold used for determining, at the third calculator 85, whether to perform amplification at the relay station may be, for example, 0dB.

From among the sub-bands determined by the third calculator 85 as sub-bands for which amplification can be performed at the relay station, the allocator 37 allocates as sub-bands for performing amplification, sub-bands of the number calculated by the second calculator 35. The allocator 37 allocates the sub-bands in a given order, such as in ascending order of gain, i.e., in descending order of interference power. Further, the allocator 37, from among the sub-bands determined by the third calculator 85 as sub-bands for which amplification can be performed at the relay station, allocates as sub-bands for performing amplification, sub-bands of the number calculated by the second calculator 35. When the number of amplifying sub-bands calculates at the second calculator 35 is greater than the number of sub-bands determined at the third calculator 85, the allocator 37 allocates all of the sub-bands determined at the third calculator 85 as sub-bands for which amplification can be performed at the relay station, to be sub-bands for performing amplification. The base station 81 broadcasts, via the switch 17 and the antenna 16, the gain of each of the sub-bands that have been allocated by the allocator 37. Other aspects of the configuration of the base station 81 are similar to those of the third embodiment. The antenna 16, the switch 17, the first measurer 82, the first table 32, the determiner 14, and the first calculator 33, for example, operate as the calculator 3 in the first embodiment. The second table 34, the second calculator 35, the allocator 37, the second measurer 83, the third table, 84, and the third calculator 85, for example, operate as the allocator 4 in the first embodiment.

The configuration of the relay station in the sixth embodiment is similar to that in the third embodiment. However, in the relay station 41 of the third embodiment depicted in FIG. 11, the receiver 42 receives and stores the gain for each sub-band and information indicating sub-bands allocated for performing amplification, which are broadcast by the base station. The notifier 43, based on the gain for each sub-band and information indicating sub-bands allocated for performing amplification received by the receiver 42, notifies the amplifier 28 of the information indicating sub-bands allocated for performing amplification. The amplifier 28 amplifies by the gain broadcasted by the base station, analog input signals of the sub-bands notified by the notifier 43.

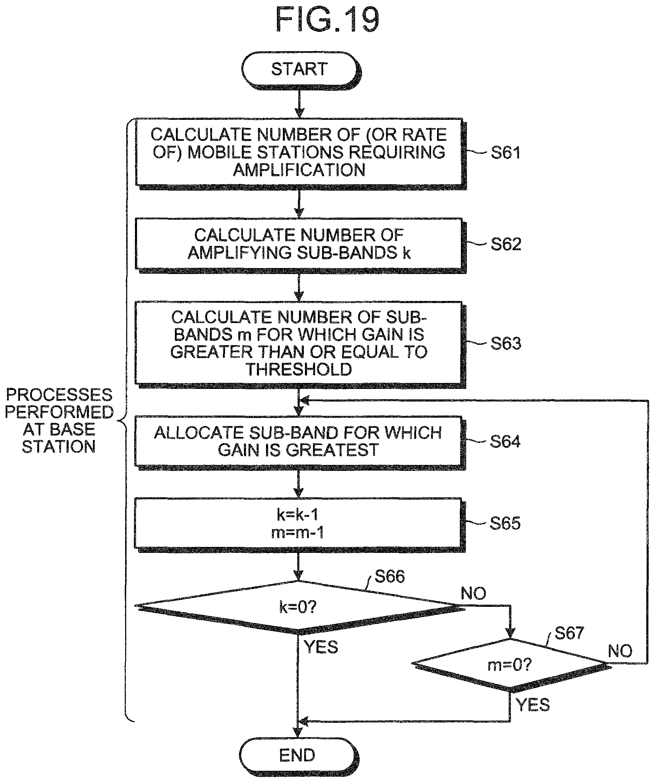

FIG. 19 is a flowchart of the wireless communication method according to the sixth embodiment. As depicted in FIG. 19, when a process of allocating sub-bands for performing amplification begins at the base station, similar to steps S31 to S33 in the third embodiment, the base station, based on mobile station reception quality, calculates the number of or the rate of mobile stations requiring amplification (step S61), and calculates the number of amplifying sub-bands k (where, k is whole number, 0 or greater) (step S62). The base station, based on the inner-cell interference power of each sub-band, obtains gain for each of the sub-bands and calculates the number of sub-bands m (where, m is a whole number, 0 or greater) for which gain is greater than or equal to a threshold (step S63). The base station, for example, allocates the sub-band for which gain is the greatest (step S64).

Similar to steps S56 to S58 in the fifth embodiment, the base station reduces k and m by 1 (step S65), determines whether resulting value of k is 0 (step S66), and determines whether the resulting value of m is 0 (step S67). If the value of k is 0 (step S66: YES), there are no more amplifying sub-bands and consequently, the base station ends the allocation process. If the value of m is (step S67: YES), there are no more sub-bands for which gain is greater than or equal to the threshold and consequently, the base station ends the allocation process. In this series of operations, the execution timing of step S63 may be before or after step S62, or before step S61. The processes performed at the base station and relay station, respectively, after sub-bands have been allocated by the base station are similar to those of the third embodiment. However, the base station need not notify other base stations of information indicating the sub-bands that have been allocated for performing amplification.

According to the sixth embodiment, effects similar to those of the first embodiment can be obtained. Further, the base station allocates sub-bands for which gain is greater than or equal to a threshold and consequently, the amplification of signals of sub-bands for which gain is less than the threshold, i.e., sub-bands having an inner-cell interference power that is greater than a given value, can be prevented. Therefore, the relay station can be prevented from becoming a source of interference. Further, similar to the second embodiment, the reception quality of a mobile station whose reception quality is poor can be improved. Furthermore, a regenerating type relay station may be used.

### (Seventh embodiment)

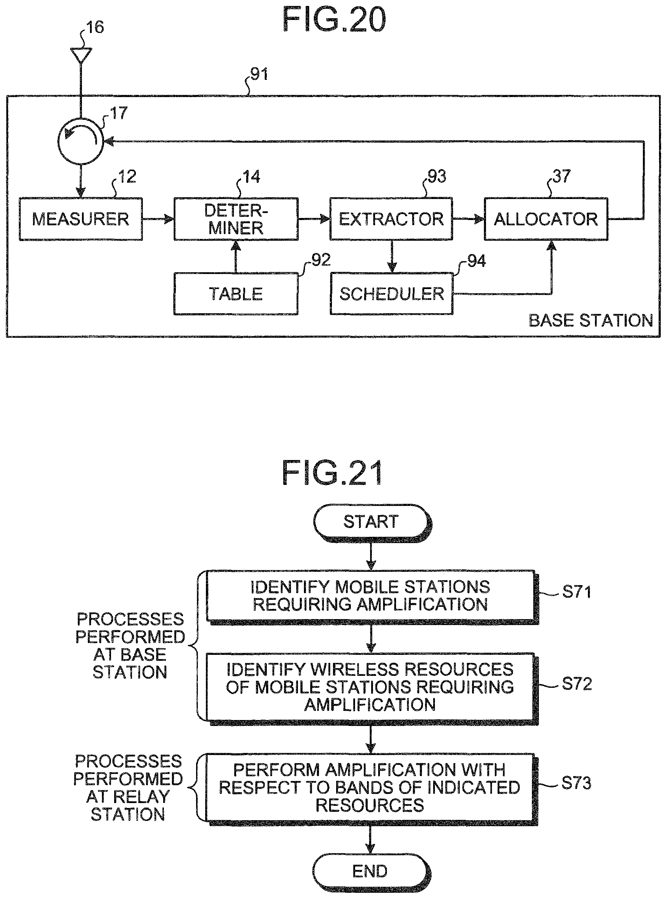

In a seventh embodiment, the base station of the third embodiment allocates for performing amplification, the frequency band used by mobile stations for which amplification is to be performed. The configuration of the base station in the seventh embodiment is, for example, as depicted in FIG. 20.

FIG. 20 is a block diagram of the base station according to the seventh embodiment. As depicted in FIG. 20, a base station 91 includes the measurer 12, a table 92, the determiner 14, an extractor 93, a scheduler 94, and the allocator 37. The table 92 is similar to the first table 32 in the third embodiment. The extractor 93 extracts information indicating the mobile stations for which amplification has been determined necessary by the determiner 14. The scheduler 94, based on the mobile station information extracted by the extractor 93, extracts information indicating wireless resources of the mobile stations. The wireless resource information includes, for example, information indicating the frequency bands used by the mobile stations. Further, the scheduler 94 allocates wireless resources for the mobile stations.

The allocator 37, based on the information that is from the scheduler 94 and that indicates the wireless resources of the mobile stations for which amplification has been determined to be necessary, allocates for performing amplification, the frequency bands of the mobile stations. The base station 91 broadcasts, via the switch 17 and the antenna 16, information indicating the frequency bands allocated by the allocator 37, for performing amplification. The base station 91 may broadcast information concerning other wireless resources in addition to the information indicating the frequency bands allocated for performing amplification. Other aspects of the configuration of the base station 91 are similar to those in the third embodiment. The antenna 16, the switch 17, the measurer 12, the table 92, the determiner 14, and the extractor 93, for example, operate as the calculator 3 in the first embodiment. However, in the seventh embodiment, the number of or the rate of mobile stations requiring amplification is not calculated. The scheduler 94 and the allocator 37, for example, operate as the allocator 4 in the first embodiment.

The configuration of the relay station in the seventh embodiment is similar to that in the third embodiment. However, in the relay station 41 of third embodiment depicted in FIG. 11, the receiver 42 receives and stores information that is broadcasted by base station and that indicates the frequency bands allocated for performing amplification. The receiver 42 may further receive and store information concerning other wireless resources, in addition to the frequency band information. The notifier 43, based on the information that is received by the receiver 42 and that indicates the frequency bands allocated for performing amplification, notifies the amplifier 28 of the frequency bands allocated for performing amplification. The amplifier 28 amplifies analog input signals of the frequency bands indicated by the notifier 43 to be allocated for performing amplification.

FIG. 21 is a flowchart of the wireless communication method according to the seventh embodiment. As depicted in FIG. 21, when a process of performing amplification begins during wireless communication between the base station and a mobile station, the base station measures the reception quality such as the SIR of the mobile station, compares the reception quality and a preliminarily set threshold, and identifies mobile stations for which amplification is necessary (step S71). The base station identifies the wireless resources, such as the frequency band used, of the mobile stations for which amplification is necessary (step S72). The base station broadcasts information indicating the wireless resources used by the mobile stations for which amplification is necessary. The relay station performs amplification with respect to the frequency band indicated by the base station (step S73).

According to the seventh embodiment, effects similar to those of the first embodiment can be obtained. Further, the base station allocates for performing amplification, the frequency bands of the mobile stations for which amplification is necessary and the relay station performs amplification with respect to the frequency bands used by the mobile stations for which amplification is necessary, consequently, the reception quality of a mobile station whose reception quality is poor can be improved. Furthermore, a regenerating type relay station may be used.

### EXPLANATIONS OF LETTERS OR NUMERALS

- 1, 11, 31, 51, 71, 81, 91: base station
- 2, 2a, 2b, 21, 41, 61: relay station
- 3: calculator
- 4: allocator
- 5: amplifier
- 6, 6a, 6b, 6c: mobile station

## Claims

1. A base station (1, 31) comprising:
a calculator (3) that calculates the number of mobile stations for which amplification is to be performed or the rate of mobile stations for which amplification is to be performed among all mobile stations; and
an allocator (4) that based on a calculation result obtained by the calculator (3), allocates from among a plurality of frequency bands, one or more frequency bands for performing amplification, the one or more frequency bands being allocated to the mobile station or stations for which amplification is to be performed, wherein the allocator (4) randomly selects one or more frequency bands among the plurality of frequency bands.

2. A relay station (2, 21) comprising:
an allocator (4) that based on the number of mobile stations for which amplification is to be performed or the rate of mobile stations for which amplification is to be performed among all mobile stations, allocates from among a plurality of frequency bands, one or more frequency bands for performing amplification, the one or more frequency bands being allocated to the mobile station or stations for which amplification is to be performed, wherein the allocator (4) randomly selects one or more frequency bands among the plurality of frequency bands; and
an amplifier (5) that performs amplification with respect to the one or more frequency bands allocated by the allocator (4).

3. A wireless communication system comprising:
a base station according to claim 1; and
a relay station (2, 41) including an amplifier (5) that performs amplification with respect to the one or more frequency bands allocated by the allocator (4).

4. A wireless communication system comprising:
a relay station according to claim 2; and
a base station (2, 41) including a calculator (3) that calculates the number of mobile stations for which amplification is to be performed or the rate of mobile stations for which amplification is to be performed among all mobile stations.

5. The wireless communication system according to claim 3 or 4, wherein
the base station (51) notifies the relay station (14) of first information related to the mobile stations for which amplification is to be performed, and
the relay station (14) has second information related to the mobile stations for which the relay station (14) is to perform amplification, and performs amplification with respect to frequency bands of a number corresponding to the number of mobile stations included in both the first information and the second information.

6. The wireless communication system according to claim 3 or 4, wherein the allocator (4), based on interference power of each frequency band, allocates one or more frequency bands for performing amplification.

7. The wireless communication system according to claim 3 or 4, wherein the allocator (4) allocates for performing amplification, the frequency band used by a mobile station for which amplification is to be performed.

8. A communication method comprising:
calculating at a base station, the number of mobile stations for which amplification is to be performed or the rate of mobile stations for which amplification is to be performed among all mobile stations;
allocating at the base station or a relay station, one or more frequency bands for performing amplification, the one or more frequency bands being allocated from among a plurality of frequency bands and based on a calculation result obtained at the calculating, the one or more frequency bands being allocated to the mobile station or stations for which amplification is to be performed, wherein the allocating includes randomly selecting one or more frequency bands among the plurality of frequency bands; and
amplifying at the relay station, with respect to the one or more frequency bands allocated by the allocator (4).

9. The communication method according to claim 8, wherein
the allocating includes allocating frequency bands of a number corresponding to the number of mobile stations included in both information possessed by the relay station and related to the mobile stations for which the relay station is to perform amplification and information related to mobile stations selected at the base station, as the mobile stations for which amplification is to be performed.

10. The communication method according to claim 9, wherein the allocating includes allocating one or more frequency bands, based on interference power of each frequency band.

## Patentansprüche

1. Basisstation (1, 31), umfassend:
einen Rechner (3), der die Anzahl von Mobilstationen, für die eine Verstärkung auszuführen ist, oder die Rate von Mobilstationen, für die eine Verstärkung auszuführen ist, unter allen Mobilstationen berechnet; und
einen Zuteiler (4), der basierend auf einem Berechnungsergebnis, das durch den Rechner (3) erhalten wird, aus einer Vielzahl von Frequenzbändern ein Frequenzband oder mehrere Frequenzbänder zum Ausführen einer Verstärkung zuteilt, wobei das eine Frequenzband oder die mehreren Frequenzbänder der Mobilstation oder den Mobilstationen zugeteilt ist/sind, für die eine Verstärkung auszuführen ist, wobei der Zuteiler (4) zufällig ein Frequenzband oder mehrere Frequenzbänder aus der Vielzahl von Frequenzbändern auswählt.

2. Relaisstation (2, 21), umfassend:
einen Zuteiler (4), der basierend auf der Anzahl von Mobilstationen, für die eine Verstärkung auszuführen ist, oder der Rate von Mobilstationen, für die eine Verstärkung auszuführen ist, unter allen Mobilstationen aus einer Vielzahl von Frequenzbändern ein Frequenzband oder mehrere Frequenzbänder zum Ausführen der Verstärkung zuteilt, wobei das eine Frequenzband oder die mehreren Frequenzbänder der Mobilstation oder den Mobilstationen zugeteilt ist/sind, für die eine Verstärkung auszuführen ist, wobei der Zuteiler (4) zufällig ein Frequenzband oder mehrere Frequenzbänder aus der Vielzahl von Frequenzbändern auswählt; und
einen Verstärker (5), der eine Verstärkung in Bezug auf das eine Frequenzband oder die mehreren Frequenzbänder ausführt, das/die durch den Zuteiler (4) zugeteilt ist/sind.

3. Drahtloses Kommunikationssystem, umfassend:
eine Basisstation nach Anspruch 1; und
eine Relaisstation (2, 41), die einen Verstärker (5) enthält, der eine Verstärkung in Bezug auf das eine Frequenzband oder die mehreren Frequenzbänder ausführt, das/die durch den Zuteiler (4) zugeteilt ist/sind.

4. Drahtloses Kommunikationssystem, umfassend:
eine Relaisstation nach Anspruch 2; und
eine Basisstation (2, 41), die einen Rechner (3) enthält, der die Anzahl von Mobilstationen, für die eine Verstärkung auszuführen ist, oder die Rate von Mobilstationen, für die eine Verstärkung auszuführen ist, unter allen Mobilstationen berechnet.

5. Drahtloses Kommunikationssystem nach Anspruch 3 oder 4, wobei
die Basisstation (51) der Relaisstation (14) erste Informationen bezüglich der Mobilstationen, für die eine Verstärkung auszuführen ist, übermittelt und
die Relaisstation (14) zweite Informationen bezüglich der Mobilstationen hat, für die die Relaisstation (14) eine Verstärkung ausführen soll, und eine Verstärkung in Bezug auf Frequenzbänder in einer Anzahl entsprechend der Anzahl von Mobilstationen ausführt, die sowohl in den ersten Informationen als auch den zweiten Informationen, enthalten sind.

6. Drahtloses Kommunikationssystem nach Anspruch 3 oder 4, wobei der Rechner (4), basierend auf einer Störleistung jedes Frequenzbands, ein Frequenzband oder mehrere Frequenzbänder zum Ausführen der Verstärkung zuteilt.

7. Drahtloses Kommunikationssystem nach Anspruch 3 oder 4, wobei der Rechner (4) zum Ausführen einer Verstärkung das Frequenzband zuteilt, das von einer Mobilstation verwendet wird, für die eine Verstärkung auszuführen ist.

8. Kommunikationsverfahren, umfassend:
Berechnen bei einer Basisstation der Anzahl von Mobilstationen, für die eine Verstärkung auszuführen ist, oder der Rate von Mobilstationen, für die eine Verstärkung auszuführen ist, unter allen Mobilstationen;
Zuteilen bei der Basisstation oder einer Relaisstation, eines Frequenzbands oder mehrerer Frequenzbänder zum Ausführen der Verstärkung, wobei das eine Frequenzband oder die mehreren Frequenzbänder aus einer Vielzahl von Frequenzbändern zugeteilt ist/sind, und das eine Frequenzband oder die mehreren Frequenzbänder basierend auf einem Berechnungsergebnis, das beim Berechnen erhalten wird, der Mobilstation oder den Mobilstationen zugeteilt wird/werden, für die eine Verstärkung auszuführen ist, wobei das Zuteilen ein zufälliges Auswählen eines Frequenzbands oder mehrerer Frequenzbänder aus der Vielzahl von Frequenzbändern enthält; und
Verstärken der Relaisstation in Bezug auf das eine Frequenzband oder die mehreren Frequenzbänder, das/die durch den Zuteiler (4) zugeteilt ist/sind.

9. Kommunikationsverfahren nach Anspruch 8, wobei das Zuteilen ein Zuteilen von Frequenzbändern in einer Anzahl entsprechend der Anzahl von Mobilstationen enthält, die sowohl in Informationen enthalten sind, die an der Relaisstation vorliegen und sich auf die Mobilstationen beziehen, für die die Relaisstation eine Verstärkung ausführen soll, als auch in Informationen, die sich auf Mobilstationen beziehen, die bei der Basisstation als die Mobilstationen ausgewählt sind, für die eine Verstärkung auszuführen ist.

10. Kommunikationsverfahren nach Anspruch 9, wobei das Zuteilen ein Zuteilen eines Frequenzbands oder mehrerer Frequenzbänder basierend auf der Störleistung jedes Frequenzbands enthält.

## Revendications

1. Station de base (1, 31) comprenant :
un calculateur (3) qui calcule le nombre de stations mobiles pour lesquelles une amplification doit être mise en oeuvre ou le taux de stations mobiles pour lesquelles l'amplification doit être mise en oeuvre parmi la totalité des stations mobiles ; et
un module d'affectation (4) qui, sur la base d'un résultat de calcul obtenu par le calculateur (3), affecte, parmi une pluralité de bandes de fréquence, une ou plusieurs bandes de fréquence en vue de mettre en oeuvre l'amplification, ladite une ou lesdites plusieurs bandes de fréquence étant affectées à la station mobile ou aux stations mobiles pour lesquelles l'amplification doit être mise en oeuvre, dans lequel le module d'affectation (4) sélectionne de manière aléatoire une ou plusieurs bandes de fréquence parmi la pluralité de bandes de fréquence.

2. Station de relais (2, 21) comprenant :
un module d'affectation (4) qui, sur la base du nombre de stations mobiles pour lesquelles une amplification doit être mise en oeuvre ou du taux de stations mobiles pour lesquelles l'amplification doit être mise en oeuvre parmi la totalité des stations mobiles, affecte, parmi une pluralité de bandes de fréquence, une ou plusieurs bandes de fréquence en vue de mettre en oeuvre l'amplification, ladite une ou lesdites plusieurs bandes de fréquence étant affectées à la station mobile ou aux stations mobiles pour lesquelles l'amplification doit être mise en oeuvre, dans laquelle le module d'affectation (4) sélectionne de manière aléatoire une ou plusieurs bandes de fréquence parmi la pluralité de bandes de fréquence ; et
un amplificateur (5) qui met en oeuvre l'amplification relativement à ladite une ou auxdites plusieurs bandes de fréquence affectées par le module d'affectation (4).

3. Système de communication sans fil comprenant :
une station de base selon la revendication 1 ; et
une station de relais (2, 41) incluant un amplificateur (5) qui met en oeuvre l'amplification relativement à ladite une ou auxdites plusieurs bandes de fréquence affectées par le module d'affectation (4).

4. Système de communication sans fil comprenant :
une station de relais selon la revendication 2 ; et
une station de base (2, 41) incluant un calculateur (3) qui calcule le nombre de stations mobiles pour lesquelles une amplification doit être mise en oeuvre ou le taux de stations mobiles pour lesquelles l'amplification doit être mise en oeuvre parmi la totalité des stations mobiles.

5. Système de communication sans fil selon la revendication 3 ou 4, dans lequel
la station de base (51) notifie, à la station de relais (14), des premières informations connexes aux stations mobiles pour lesquelles l'amplification doit être mise en oeuvre ; et
la station de relais (14) présente des secondes informations connexes aux stations mobiles pour lesquelles la station de relais (14) doit mettre en oeuvre l'amplification, et met en oeuvre l'amplification relativement à des bandes de fréquence d'un nombre correspondant au nombre de stations mobiles incluses dans les premières informations et dans les secondes informations.

6. Système de communication sans fil selon la revendication 3 ou 4, dans lequel le module d'affectation (4), sur la base d'une puissance de brouillage de chaque bande de fréquence, affecte une ou plusieurs bandes de fréquence en vue de mettre en oeuvre l'amplification.

7. Système de communication sans fil selon la revendication 3 ou 4, dans lequel le module d'affectation (4) affecte, en vue de mettre en oeuvre l'amplification, la bande de fréquence utilisée par une station mobile pour laquelle l'amplification doit être mise en oeuvre.

8. Procédé de communication comprenant les étapes ci-dessous consistant à :
calculer, au niveau d'une station de base, le nombre de stations mobiles pour lesquelles une amplification doit être mise en oeuvre ou le taux de stations mobiles pour lesquelles l'amplification doit être mise en oeuvre parmi la totalité des stations mobiles ;
affecter, au niveau de la station de base ou d'une station de relais, une ou plusieurs bandes de fréquence en vue de mettre en oeuvre l'amplification, ladite une ou lesdites plusieurs bandes de fréquence étant affectées parmi une pluralité de bandes de fréquence et sur la base d'un résultat de calcul obtenu dans le cadre de l'étape de calcul, ladite une ou lesdites plusieurs bandes de fréquence étant affectées à la station mobile ou aux stations mobiles pour lesquelles l'amplification doit être mise sen oeuvre, dans lequel l'étape d'affectation inclut l'étape consistant à sélectionner de manière aléatoire une ou plusieurs bandes de fréquence parmi la pluralité de bandes de fréquence ; et
mettre en oeuvre une amplification, au niveau de la station de relais, relativement à ladite une ou auxdites plusieurs bandes de fréquence affectées par le module d'affectation (4).

9. Procédé de communication selon la revendication 8, dans lequel
l'étape d'affectation consiste à affecter des bandes de fréquence d'un nombre correspondant au nombre de stations mobiles incluses tant dans les informations possédées par la station de relais et connexes aux stations mobiles pour lesquelles la station de relais doit mettre en oeuvre l'amplification, que dans les informations connexes à des stations mobiles sélectionnées au niveau de la station de base, en qualité de stations mobiles pour lesquelles une amplification doit être mise en oeuvre.

10. Procédé de communication selon la revendication 9, dans lequel l'étape d'affectation consiste à affecter une ou plusieurs bandes de fréquence, sur la base d'une puissance de brouillage de chaque bande de fréquence.
